# EUROPÄISCHE PATENTSCHRIFT

(11) **EP 2 202 470 B1**
(45) Veröffentlichungstag und Bekanntmachung des Hinweises auf die Patenterteilung: **10.04.2013**
(21) Anmeldenummer: 09015779.3
(22) Anmeldetag: 21.12.2009
(51) Int. Cl.: F24J 2/40, G06Q 50/00

(54) **Verfahren und System zur Nutzung erneuerbarer Energiequellen**
Method and system for use of renewable energy sources
Procédé et système destiné à l'utilisation de sources d'énergie renouvelables

(30) Priorität: 23.12.2008 DE 102008063250
(43) Veröffentlichungstag der Anmeldung: 30.06.2010
(73) Patentinhaber: Natcon7 Gmbh, 22453 Hamburg (DE)
(72) Erfinder: Adam, Dirk, 22339 Hamburg (DE)
(74) Vertreter: Schildberg, Peter

(56) Entgegenhaltungen:
- EP-A2- 1 801 950
- DE-A1-102004 056 254
- US-A1- 2003 102 675
- KARSTEN KREISSLER: "100% regelbar Das Regenerative Kombikraftwerk" INTERNET CITATION 12. Oktober 2007 (2007-10-12), Seiten 1-25, XP007909094 Gefunden im Internet: URL:http://www.gruene-pfalz.de/WordPress/2 .22/wordpress/wp-content/kreiss ler_100_prozent.pdf> [gefunden am 2009-07-06]

## Beschreibung

Die Erfindung betrifft ein Verfahren und ein System zur Nutzung erneuerbarer Energiequellen. Zu diesem Zweck werden unterschiedliche Energieerzeugungsanlagen, die mit einer erneuerbaren Energiequelle betrieben werden, eingesetzt. Hierzu zählen insbesondere Biogasanlagen, Geothermieanlagen, Fotovoltaik- oder Sonnenkollektoranlagen, Wasserkraft- und Windenergieanlagen. Diese Energieerzeugungsanlagen wandeln die von den erneuerbaren Energiequellen zur Verfügung gestellte Energie insbesondere in elektrische Energie oder Wärmeenergie um, die der weiteren Nutzung einfach zugänglich ist.

Sowohl bei der Nutzung der genannten Energiequelle in Inselnetzen als auch bei der Einspeisung der zur Verfügung gestellten Energie in öffentliche Versorgungsnetze stellt die nur bedingt mögliche Regelbarkeit und Vorhersagbarkeit der Energieerzeugung eine große Herausforderung dar. Ein wesentlicher Grund für die eingeschränkte Regel- und Vorhersagbarkeit der Energieerzeugung besteht in der schwankenden Verfügbarkeit des "solaren Brennstoffes", beispielsweise in einem schwankenden Windangebot. Zur Linderung dieser Probleme ist die Erstellung von Prognosen bekannt, die sich beispielsweise auf eine Wettervorhersage gründen. Das Erstellen derartiger Prognosen ist jedoch schwierig und ob der gewünschte Erfolg, nämlich eine korrekte Voraussage der im Prognosezeitraum tatsächlich zur Verfügung gestellten Energie, eintritt, ist allein vom Eintreten der Prognose abhängig.

Ein weiterer Grund für die eingeschränkte Plan- und Vorhersagbarkeit der erzeugten Energie ist die in der Regel dezentrale Struktur. Beispielsweise ist die Energieerzeugung einer in einem abgelegenen landwirtschaftlichen Betrieb befindlichen Biogasanlage zusätzlich davon abhängig, wie der lokal verantwortliche Betreiber die Anlage betreibt. In der Regel berücksichtigt der Betreiber im Wesentlichen nur prozess- und anlagentechnische Besonderheiten und die an seinem Standort gegebenen Rahmenbedingungen. Zusätzlich kann er durch vielfältige sonstige, nicht auf die Technik zurückzuführende Zwänge daran gehindert sein, das auf Grundlage des verfügbaren, nachwachsenden Rohstoffs gegebene Energieerzeugungspotenzial voll auszuschöpfen.

Die genannten Schwierigkeiten der Plan- und Vorhersagbarkeit der Energieerzeugung sind für den Nutzen und die Akzeptanz der erneuerbaren Energiequellen von Nachteil. Insbesondere können sie ein Vorhalten schnell verfügbarer Reserveenergien sowie einen Ausbau der Versorgungsnetze erforderlich machen.

Aus der Druckschrift DE 10 2004 056 254 A1 ist ein Verfahren zum Optimieren des Betriebs von Windenergieanlagen bekannt geworden. Jede Windenergieanlage wird von einer dezentralen Steuerung anhand eines Satzes von Betriebsparametern betrieben. Die Windenergieanlagen erhalten von einer zentralen Steuerung Sollgrößen für den Betrieb. Bei der Festlegung der Sollgrößen durch den Parkmaster werden externe Vorgaben berücksichtigt.

Davon ausgehend ist es die Aufgabe der Erfindung, ein Verfahren und ein System zur Nutzung erneuerbarer Energiequellen zur Verfügung zu stellen, das die planmäßige Nutzung der erneuerbaren Energiequellen vereinfacht und die Plan- und Vorhersagbarkeit der tatsächlich zur Verfügung gestellten Energie verbessert.

Diese Aufgabe wird gelöst durch das Verfahren mit den Merkmalen des Anspruchs 1 und durch das System mit den Merkmalen des Anspruchs 13: Vorteilhafte Ausgestaltungen sind in den sich jeweils anschließenden Unteransprüchen angegeben.

Das erfindungsgemäße Verfahren dient zur Nutzung erneuerbarer Energiequellen und benötigt mindestens eine dezentrale Energieerzeugungsanlage, die mit einer erneuerbaren Energiequelle betrieben wird, eine dezentrale Steuereinheit am Ort der mindestens einen dezentralen Energieerzeugungsanlage, die deren Betrieb steuert, und eine zentrale Steuereinheit. Das Verfahren weist die folgenden Schritte auf:
a) Erstellen eines Fahrplanvorschlags, in dem für einen zukünftigen Zeitraum Vorgaben für den Betrieb der mindestens einen dezentralen Energieerzeugungsanlage festgelegt sind, und Übermitteln des Fahrplanvorschlags an die zentrale Steuereinheit über ein Computernetzwerk,
b) Erstellen eines Fahrplans auf Grundlage des Fahrplanvorschlags, wobei in der zentralen Steuerenheit ein Vergleich des Fahrplanvorschlags mit einem prognostizierten Bedart erfolgt und der Fahrplan gegebenfalls abweichend vom Fahrplanvorschlag an den Bedarf angepasst erstellt wird.
c) Übermitteln des Fahrplans von der zentralen Steuereinheit an die dezentrale Steuereinheit über ein Computernetzwerk,
d) automatisches Steuern der mindestens einen dezentralen Energieerzeugungsanlage durch die dezentrale Steuereinheit nach Maßgabe des Fahrplans.

Der von dem Fahrplan und dem Fahrplanvorschlag abgedeckte zukünftige Zeitraum ist fest vorgegeben und kann beispielsweise eine Woche, eine Stunde oder bevorzugt einen Tag betragen. Dabei ist der Zeitraum in kleinere Zeitintervalle unterteilt, die beispielsweise eine Minute, eine Stunde oder bevorzugt fünfzehn Minuten umfassen. Beim Erstellen des Fahrplanvorschlags wird für jedes der vorgegebenen Zeitintervalle innerhalb des Planungszeitraums festgelegt, wie die mindestens eine dezentrale Energieerzeugungsanlage betrieben werden soll.

Für die Übermittlung des erstellten Fahrplanvorschlags an die zentrale Steuereinheit ist ein Computernetzwerk vorgesehen, insbesondere unter Einbeziehung des Internets. Es kann jedoch auch ein beliebiges anderes Wide Area Network (WAN) genutzt werden, beispielsweise ein Mobilfunknetz oder eine Festnetz-Telefonleitung.

Auf Grundlage des Fahrplanvorschlags wird ein Fahrplan erstellt, der später von der dezentralen Steuereinheit abgearbeitet wird. Bei der Erstellung des Fahrplans kann eine Überprüfung, Optimierung oder sonstige Änderung des Fahrplanvorschlags erfolgen. Es ist jedoch ebenso gut möglich, den Fahrplanvorschlag unverändert zu übernehmen.

Anschließend wird der Fahrplan von der zentralen Steuereinheit an die dezentrale Steuereinheit übermittelt, wobei wiederum ein Computernetzwerk verwendet wird. Für das Computernetzwerk bestehen die bereits genannten Möglichkeiten.

Nach Maßgabe des Fahrplans erfolgt ein automatisches Steuern der mindestens einen dezentralen Energieerzeugungsanlage durch die dezentrale Steuereinheit. D. h., dass der Fahrplan grundsätzlich ohne weiteres manuelles Zutun automatisch abgearbeitet werden kann. Zumindest ist bei einer Änderung einer Vorgabe für den Betrieb der Anlage von einem gegebenen Zeitintervall zum nächsten Zeitintervall kein manueller Eingriff in die Betriebsführung der Anlage notwendig. Dennoch kann für den fahrplanmäßigen Betrieb der dezentralen Energieerzeugungsanlage die Mitwirkung eines Betreibers erforderlich sein, beispielsweise um nachwachsende Rohstoffe in den Fermenter einer Biogasanlage einzubringen.

Durch das erfindungsgemäße Verfahren wird die Planbarkeit der Energieerzeugung wesentlich verbessert. Zum einen zwingt das Erstellen eines Fahrplanvorschlags den jeweils Verantwortlichen dazu, sich sehr konkret für jedes Zeitintervall des Planungszeitraums mit dem Betrieb der Anlage auseinanderzusetzen. Dadurch wird eine wesentliche Grundlage für die Planbarkeit gelegt. Hinzu kommt, dass bei der Erstellung des Fahrplans auf Grundlage des Fahrplanvorschlags eine Überprüfung der getroffenen Vorgaben, beispielsweise auf ihre Plausibilität hin, erfolgen kann. Dies trägt dazu bei, dass der später für den Betrieb der Anlage vorgegebene Fahrplan tatsächlich eingehalten werden kann. Ein weiterer besonderer Vorteil des Verfahrens ist die automatische Abarbeitung des erstellten Fahrplans, wodurch der tatsächliche Anlagenbetrieb weniger von alltäglichen, unvorhersehbaren Zufällen beeinträchtigt wird. Beispielsweise wird eine für einen bestimmten Zeitpunkt durch den Fahrplan vorgegebene Leistungssteigerung zuverlässig ausgeführt, auch wenn der Anlagenbetreiber aufgrund einer Erkrankung oder auch nur eines Telefongesprächs verhindert ist. Dies trägt wesentlich dazu bei, dass die Energieerzeugung wie geplant stattfindet. Gleichzeitig wird der Betrieb der Energieerzeugungsanlage wesentlich vereinfacht. Weiterhin ist das Verfahren durch die Ausnutzung der Computernetzwerke für die Übermittlung des Fahrplanvorschlags und des Fahrplans einfach durchführbar.

In einer Ausgestaltung des Verfahrens werden bei der Erstellung des Fahrplanvorschlags oder des Fahrplans Prognosen der Betriebsbedingungen der mindestens einen dezentralen Energieerzeugungsanlage berücksichtigt. Diese Maßnahme trägt dazu bei, dass ein erstellter Fahrplan tatsächlich eingehalten werden kann.

In einer weiteren Ausgestaltung umfassen die Vorgaben des Fahrplanvorschlags und/oder des Fahrplans eine zu erzeugende Wirk- und/oder Blindleistung und/oder zu erbringende Netzsystemdienstleistungen. Grundsätzlich können die Vorgaben für den Betrieb der dezentralen Energieerzeugungsanlage sehr einfach sein, etwa lediglich in einer Ein/Aus-Information bestehen. Es ist jedoch auch möglich, differenzierte Vorgaben zu machen, etwa konkrete Sollwerte für die Wirkleistung oder die Blindleistung. Darüber hinaus ist auch daran gedacht, das Verfahren zur besseren Planbarkeit von Netzsystemdienstleistungen einzusetzen. Diese umfassen insbesondere eine Wirkleistungsregelung, eine Blindleistungsregelung, eine Frequenzregelung und/oder eine Spannungsregelung. Die genannten Netzsystemdienstleistungen sind beim Betrieb von Inselnetzen und auch beim Betrieb öffentlicher Netze u. U. stark nachgefragt und dringend erforderlich, um einen stabilen Netzbetrieb zu ermöglichen. Die Netzsystemdienstleistungen können grundsätzlich auch von dezentralen Energieerzeugungsanlagen, die mit erneuerbaren Energiequellen betrieben werden, erbracht werden. Daher sieht die Erfindung vor, entsprechende Vorgaben in das Verfahren zu integrieren. Dadurch kann die Planbarkeit auch der Netzsystemdienstleistungen optimiert werden.

In einer weiteren Ausgestaltung des Verfahrens wird der Fahrplanvorschlag von einer Person erstellt, die für den Betrieb der mindestens einen dezentralen Energieerzeugungsanlage vor Ort verantwortlich ist. Wegen der erfmdungsgemäß vorgesehenen Übermittlung des Fahrplanvorschlags an die zentrale Steuereinheit über ein Computernetzwerk kann der Fahrplanvorschlag grundsätzlich an einem beliebigen Ort erstellt werden. Bevorzugt berücksichtigt der Fahrplanvorschlag anlagen- und standortspezifische Besonderheiten, über welche die für den lokalen Anlagenbetrieb Verantwortlichen erfahrungsgemäß weitaus genauer informiert sind, als andere für die Erstellung der Fahrplanvorschläge in Betracht kommende Personengruppen, etwa Vertriebsverantwortliche einer Betreiber- oder Vermarktungsgesellschaft. Das Verfahren ermöglicht, dieses lokale Know-How auf einfache Weise zur Verbesserung der Planbarkeit des Anlagenbetriebs einzusetzen.

Eine Ausgestaltung des Verfahrens sieht vor, dass der Fahrplanvorschlag mit Hilfe eines Computernetzwerkes erstellt wird. Zusätzlich zur vorgesehenen Übermittlung des Fahrplanvorschlags über ein Computernetzwerk wird auch die Erstellung des Fahrplanvorschlags selbst dadurch vereinfacht. Insbesondere ist daran gedacht, ein Web-Interface zur Verfügung zu stellen, das ein Erstellen des Fahrplans mit einem gewöhnlichen Internetbrowser ermöglicht. Dadurch sind die technischen Vorkehrungen zur Erstellung des Fahrplanvorschlags sehr einfach und vielerorts unmittelbar verfügbar. Beispielsweise kann eine für den lokalen Betrieb der Energieerzeugungsanlage verantwortliche Person einen Fahrplanvorschlag am Wochenende von zu Hause aus oder während einer Geschäftsreise aus einem Hotel erstellen.

Bei der Erfindung erfolgt bei der Erstellung des Fahrplans in der zentralen Steuereinheit ein Vergleich des Fahrplanvorschlags mit einem prognostizierten Bedarf und der Fahrplan wird gegebenenfalls abweichend vom Fahrplanvorschlag an den Bedarf angepasst erstellt. Dies ermöglicht, eine zentral vorliegende Bedarfsprognose in einfacher Weise beim Anlagenbetrieb zu berücksichtigen. Insbesondere kann bei einem Fahrplanvorschlag, der einen prognostizierten Bedarf überschreitet, problemlos eine Reduzierung der im Fabrplanvorschlag enthaltenen Vorgaben für den tatsächlichen Fahrplan erfolgen, ohne dass dies die planmäßige Abarbeitung des Fahrplans gefährdet. Ergänzend ist es auch möglich, die vorgenommene Reduzierung der Vorgaben im Fahrplan gegenüber dem Fahrplanvorschlag zu speichern. Es kann dann davon ausgegangen werden, dass die vorgenommene Reduzierung einer verfügbaren Reserve entspricht, die bei Bedarf abrufbar ist.

In einer Ausgestaltung weist die dezentrale Steuereinheit eine Überwachungseinrichtung auf, die Betriebsdaten und/oder Umgebungsbedingungen der mindestens einen dezentralen Energieerzeugungsanlage überwacht. Die überwachten Betriebsdaten umfassen beispielsweise die erzeugte Wirk- und/oder Blindleistung oder eine in einem Gasspeicher einer Biogasanlage vorgehaltene Gasmenge. Zu den Umgebungsbedingungen zählen u. a. meteorologische Daten wie die Temperatur oder die Windstärke. Die Überwachung der genannten Größen erlaubt eine einfache Überprüfung, ob ein vorgegebener Fahrplan eingehalten wird.

In einer Ausgestaltung werden die von der Überwachungseinrichtung überwachten Betriebsdaten und/oder Umgebungsbedingungen über ein Computemctzwerk an die zentrale Steuereinheit übermittelt und mit dem Fahrplan verglichen. Der Vergleich mit dem Fahrplan kann bevorzugt in Echtzeit erfolgen. Auf diese Weise kann die Einhaltung des Fahrplans mit geringem Aufwand an zentraler Stelle überwacht werden.

Gemäß einer Ausgestaltung des Verfahrens ist eine Vielzahl von dezentralen Energieerzeugungsanlagen vorhanden, die mit erneuerbaren Energiequellen betrieben werden, wobei eine entsprechende Anzahl von Fahrplanvorschlägen und Fahrplänen erstellt wird. Einerseits werden dadurch die bereits im Einzelnen geschilderten Vorteile des Verfahrens gleichzeitig bei einer Vielzahl von Energieerzeugungsanlagen erreicht, wobei nur eine einzige zentrale Steuereinheit erforderlich ist. Andererseits wird durch die Bündelung mehrerer dezentraler Energieerzeugungsanlagen die Planbarkeit der Energieerzeugung weiter verbessert, weil gegebenenfalls vorhandene Abweichungen von einzelnen Fahrplänen weniger ins Gewicht fallen.

In einer Ausgestaltung wird ein Fahrplan angepasst, wenn der Vergleich der von der Überwachungseinrichtung überwachten Betriebsdaten und/oder Umgebungsbedingungen mit dem Fahrplan Abweichungen aufzeigt. Dadurch kann den festgestellten Fahrplanabweichungen entgegengewirkt werden. Wenn beispielsweise eine dezentrale Energieerzeugungsanlage hinter den fahrplanmäßigen Vorgaben zurückbleibt, kann durch Änderung des Fahrplans einer anderen dezentralen Energieerzeugungsanlage eine Kompensation erfolgen. Dabei kann insbesondere die in der zentralen Steuereinheit vorhandene Kenntnis über die Möglichkeit der Erhöhung der Vorgaben der anderen Energieerzeugungsanlage ausgenutzt werden, etwa wenn wie oben geschildert zuvor eine Reduzierung des für die andere Energieerzeugungsanlage vorliegenden Fahrplanvorschlags vorgenommen wurde. Durch die alternativ oder zusätzlich vorgesehene Berücksichtigung der Betriebsbedingungen bei dem Vergleich ist es außerdem möglich, zu prognostizieren, welchen weiteren Verlauf die festgestellten Abweichungen nehmen werden. Zeigen die überwachten Betriebsbedingungen eine technische Störung der Anlage, kann daraus gefolgert werden, dass ein fahrplanmäßiger Betrieb für einen gewissen Zeitraum nicht mehr möglich sein wird. Es ist dann möglich, den Fahrplan der von der Störung betroffenen Anlage entsprechend anzupassen, d. h. beispielsweise alle Vorgaben auf null zu setzen. Gleichzeitig kann eine Kompensation mit Hilfe einer anderen bereits in Betrieb befindlichen Energieerzeugungsanlage oder einer zusätzlich in Betrieb zu nehmenden Energieerzeugungsanlage erfolgen, was wiederum durch eine Änderung der jeweiligen Fahrpläne erfolgt. Dadurch, dass auch der Fahrplan der von der Abweichung betroffenen Energieerzeugungsanlage angepasst wird, kann die Energieerzeugung insgesamt entsprechend den in der zentralen Steuereinheit vorliegenden Fahrplänen erfolgen. Es ist ausgeschlossen, dass eine beispielsweise von einer Störung betroffene Anlage wieder in Betrieb genommen wird, ohne dass dies zuvor durch einen entsprechenden Fahrplan berücksichtigt werden konnte.

In einer weiteren Ausgestaltung wird in der zentralen Steuereinheit ein Bericht erstellt, der Abweichungen von dem Fahrplan bzw. den Fahrplänen ausweist. Bevorzugt kann der Bericht automatisch von einem speziellen Berichtswesenmodul erstellt werden. Dadurch wird beispielsweise eine langfristige statistische Auswertung der aufgetretenen Abweichungen möglich, was eine wichtige Grundlage für eine Optimierung der Fahrplanerstellung legt.

Gemäß einer Ausgestaltung wird der Bericht über ein Computemetzwerk an die für den Betrieb der jeweiligen mindestens einen dezentralen Energieerzeugungsanlage vor Ort verantwortliche Person übermittelt. Dadurch kann auch diese Person bei der Erstellung ihrer Fahrplanvorschläge von den vorliegenden Erkenntnissen über Abweichungen profitieren.

In einer Ausgestaltung gibt es eine übergeordnete Koordinierungsstelle, die einen Gruppenfahrplanvorschlag für mehrere an die zentrale Steuereinheit angeschlossene dezentrale Energieerzeugungsanlagen erstellt und/oder ändert und diesen Gruppenfahrplanvorschlag über ein Computernetzwerk an die zentrale Steuereinheit übermittelt. Die übergeordnete Koordinierungsstelle kann beispielsweise ein Betreiber eines Verbunds mehrerer dezentraler Energieerzeugungsanlagen sein. Zur Erstellung oder Änderung des Gruppenfahrplanvorschlags kann beispielsweise ein Web-Interface benutzt werden wie oben bei der Erstellung eines individuellen Fahrplanvorschlags beschrieben. Durch die Einbindung der übergeordneten Koordinierungsstelle in die Planung des Anlagenbetriebs kann die Planbarkeit und die Einhaltung externer Vorgaben verbessert werden.

Die obige Aufgabe wird ebenfalls gelöst durch das System mit den Merkmalen des Anspruchs 13. Das System dient zur Nutzung erneuerbarer Energiequellen und hat
- mindestens eine dezentrale Energieerzeugungsanlage, die mit einer erneuerbaren Energiequelle betrieben wird,
- eine dezentrale Steuereinheit am Ort der mindestens einen dezentralen Energieerzeugungsanlage, die deren Betrieb automatisch nach Maßgabe eines vorgebbaren Fahrplans steuern kann, und
- eine zentrale Steuereinheit, die eine Einrichtung zum Empfang eines Fahrplanvorschlags über ein Computernetzwerk, eine Einrichtung zur Erstellung eines Fahrplans auf Grundlage des Fahrplanvorschlags und eine Einrichtung zur Übermittlung des Fahrplans an die dezentrale Steuereinheit über ein Computernetzwerk aufweist.

Das System eignet sich zur Ausführung des erfindungsgemäßen Verfahrens. Hinsichtlich der Erläuterung der verwendeten Begriffe und der mit dem System erreichbaren Vorteile wird auf die obigen Erläuterungen des Verfahrens verwiesen.

In einer Ausgestaltung ist die mindestens eine dezentrale Energieerzeugungsanlage eine Biogasanlage. Grundsätzlich kann das System mit beliebigen Energieerzeugungsanlagen, die mit erneuerbaren Energien betrieben werden, arbeiten. Eine Biogasanlage bietet den besonderen Vorteil, dass ihr Betrieb innerhalb gewisser Grenzen besser planbar ist als beispielsweise der Betrieb einer Fotovoltaikanlage. Dies liegt daran, dass die Biogasanlage zwar sehr wohl vom lokal verfügbaren, in der Biogasanlage umzusetzenden, nachwachsenden Rohstoff abhängig ist, dieser jedoch häufig mit einer gewissen Regelmäßigkeit anfällt und zudem lagerfähig ist. Gleiches gilt für das erzeugte Biogas, das gegebenenfalls in der Anlage zwischengespeichert werden kann. Aus diesem Grund kann ein vorgegebener Fahrplan von der Biogasanlage besonders zuverlässig abgearbeitet werden.

In einer Ausgestaltung des Systems ist die zentrale Steuereinheit so ausgebildet, dass sie bei der Erstellung des Fahrplans Prognosen der Betriebsbedingungen der mindestens einen dezentralen Energieerzeugungsanlage berücksichtigen kann.

In einer Ausgestaltung des Systems ist eine Einrichtung zur Eingabe eines Fahrplanvorschlags vorhanden, die über ein Computemetzwerk mit der zentralen Steuereinheit verbindbar ist.

In einer Ausgestaltung des Systems weist die dezentrale Steuereinheit eine Überwachungseinrichtung aufweist, die mit der dezentralen Energieerzeugungsanlage und/oder mit Sensoren verbunden ist und Betriebsdaten und/oder Umgebungsbedingungen der mindestens einen dezentralen Energieerzeugungsanlage überwachen kann.

Bevorzugt ist die Überwachungseinrichtung über ein Computemetzwerk mit der zentralen Steuereinheit verbindbar und kann die überwachten Betriebsdaten und/oder Umgebungsbedingungen an die zentrale Steuereinheit übermitteln.

In einer Ausgestaltung des Systems ist eine Vielzahl von dezentralen Energieerzeugungsanlagen vorhanden, die mit erneuerbaren Energiequellen betrieben werden.

In einer Ausgestaltung des Systems ist in der zentralen Steuereinheit ein Berichtswesenmodul vorhanden ist, das einen Bericht erstellen kann, der Abweichungen von dem Fahrplan bzw. den Fahrplänen ausweist.

In einer Ausgestaltung des Systems ist eine übergeordnete Koordinierungsstelle vorhanden ist, die auf eine Einrichtung zugreifen kann, mit der ein Gruppenfahrplanvorschlag für mehrere an die zentrale Steuereinheit angeschlossene dezentrale Energieerzeugungsanlagen erstellt und/oder geändert werden kann, wobei die Koordinierungsstelle über ein Computernetzwerk mit der zentralen Steuereinheit verbindbar ist und den Gruppenfahrplanvorschlag an diese übermitteln kann.

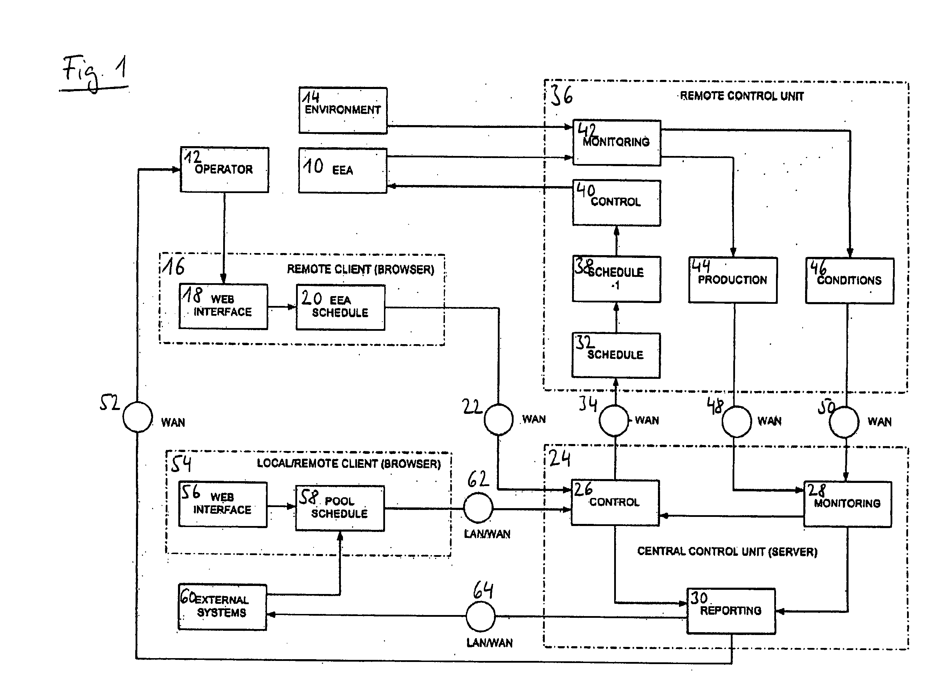

Die Erfindung wird nachfolgend anhand eines in einer Figur dargestellten Ausführungsbeispiels näher erläutert. Die einzige Figur zeigt schematisch den Aufbau eines erfindungsgemäßen Systems zur Nutzung erneuerbarer Energiequellen und illustriert die Anwendung des zugehörigen Verfahrens.

Das in der Figur dargestellte System weist eine Energieerzeugungsanlage 10 auf, die mit erneuerbaren Energien betrieben wird. Im Beispiel handelt es sich um eine Biogasanlage. Für den Betrieb der Energieerzeugungsanlage 10 ist der Betreiber 12 verantwortlich. Dabei unterliegt der Betrieb der Energieerzeugungsanlage 10 Umgebungsbedingungen 14, beispielsweise einer bestimmten Außentemperatur. Die Energieerzeugungsanlage 10 kann an ein Inselnetz oder an ein öffentliches Versorgungsnetz angeschlossen sein.

Der für den Betrieb der Energieerzeugungsanlage 10 lokal verantwortliche Betreiber 12 erstellt mit Hilfe eines Internetbrowsers 16 über ein Web-Interface 18 einen Fahrplanvorschlag 20, der Vorgaben für den Betrieb der Energieerzeugungsanlage 10 enthält. Im dargestellten Beispiel betreffen diese Vorgaben die von der Energieerzeugungsanlage 10 zur Verfügung zu stellende elektrische Wirkleistung sowie eine thermische Leistung. Für beide Leistungswerte umfasst der Fahrplan Sollwerte, die jeweils für ein Zeitintervall von fünfzehn Minuten konstant sind. Der gesamte Fahrplanvorschlag 20 deckt einen Zeitraum von einem Tag ab und enthält somit 96 Vorgaben für jeden der beiden Leistungswerte. Der Internetbrowser 16 ist über ein Computernetzwerk 22, hier das Internet, mit der zentralen Steuereinheit 24 verbunden. Die zentrale Steuereinheit umfasst ein Steuermodul 26, ein Überwachungsmodul 28 und ein Berichtswesenmodul 30.

In der zentralen Steuereinheit 24 wird der Fahrplanvorschlag unter Berücksichtigung von Prognosen für die Betriebsbedingungen der Energieerzeugungsanlage 10 und unter Berücksichtigung eines prognostizierten Bedarfs als Grundlage für die Erstellung eines Fahrplans 32 verwendet. Dieser Fahrplan 32 wird über ein Computernetzwerk 34 an die dezentrale Steuereinheit 36 übermittelt.

Der übermittelte Fahrplan 32 wird in der dezentralen Steuereinheit zunächst gespeichert. Die dezentrale Steuereinheit 36 enthält einen weiteren Fahrplan 38, der als "Fahrplan - 1" bezeichnet wird und der zum Zeitpunkt der Übermittlung des Fahrplans 32 noch abgearbeitet wird. Dieser betrifft den aktuellen Tag, während der Fahrplan 32 für den Folgetag gilt. Die dezentrale Steuereinheit 36 weist ein Steuermodul 40 auf, das ausgehend von den Informationen des aktuellen "Fahrplans - 1" 38 Steuerbefehle unmittelbar in die Betriebsführung der Energieerzeugungsanlage 10 abgibt. Auf diese Weise wird sichergestellt, dass die Energieerzeugungsanlage 10 entsprechend dem aktuellen Fahrplan betrieben wird.

Ebenfalls in der Figur dargestellt ist die vorgesehene Überwachung des Zustands der Energieerzeugungsanlage 10. Zu diesem Zweck weist die dezentrale Steuereinheit 36 eine Überwachungseinrichtung 42 auf, die mit Hilfe von nicht dargestellten Sensoren einerseits die Umgebungsbedingungen 14 erfasst. Zusätzlich erfasst die Überwachungseinrichtung 42 Betriebsdaten der Energieerzeugungsanlage 10. Hierzu zählen insbesondere die aktuell zur Verfügung gestellte Wirkleistung, die aktuell zur Verfügung gestellte Blindleistung oder sonstige für den Betrieb der Energieerzeugungsanlage wichtige Faktoren, etwa die Menge eines vorgehaltenen Brennstoffs oder die Temperatur in einem Fermenter. Diesbezüglich ist in der Figur dargestellt, dass die Überwachungseinrichtung 42 die überwachten Größen getrennt nach die Produktion der Energieerzeugungsanlage betreffenden Größe 44 und sonstigen Betriebsbedingungen 46 zur Verfügung stellt und über gesonderte Computernetzwerke 48 und 50 an die zentrale Steuereinheit 24, genauer an das darin befindliche Überwachungsmodul 28, weiterleitet. Natürlich können die genannten Daten auch gemeinsam über ein einziges Computernetzwerk übermittelt werden.

Die innerhalb der zentralen Steuereinheit 24 von dem Überwachungsmodul 28 empfangenen Daten der Zustandsüberwachung werden der Steuerung 26 der zentralen Steuereinheit 24 zur Verfügung gestellt. Diese kann daraufhin unmittelbar eine Fahrplanänderung veranlassen. Gleichzeitig werden die Daten von dem Überwachungsmodul 28 an das Berichtswesenmodul 30 weitergeleitet, welches auch mit der Steuerung 26 verbunden ist, um Informationen über die Fahrpläne zu erhalten. Auf dieser Grundlage erstellt das Berichtswesenmodul 30 einen Bericht, der die Vorgaben eines Fahrplans und die von der Überwachungseinrichtung 42 zur Verfügung gestellten Daten miteinander vergleicht und einen Bericht über die festgestellten Abweichungen erstellt. Dieser Bericht wird über ein Computernetzwerk 52 dem Betreiber 12 der Energieerzeugungsanlage 10 zur Verfügung gestellt.

Als weitere Möglichkeit der Erstellung von Fahrplanvorschlägen und der Einflussnahme auf die Fahrpläne ist in der Figur eine weitere Eingabeeinrichtung gezeigt, die wiederum im Wesentlichen aus einem Internetbrowser 54 besteht. Sie umfasst ein Web-Interface 56 und einen Gruppenfahrplanvorschlag 58, der eine Vielzahl einzelner Fahrplanvorschläge bündelt und eine Gruppe von Energieerzeugungsanlagen betrifft, die von einer übergeordneten Koordinierungsstelle 60 betrieben werden. Diese übergeordnete Koordinierungsstelle 60 hat die Möglichkeit, selbst Gruppenfahrplanvorschläge 58 zu erstellen oder diese zu ändern. Die Gruppenfahrplanvorschläge 58 werden wiederum über ein Computernetzwerk 62 an die zentrale Steuereinheit 24 übermittelt. Der von dem Berichtswesenmodul 30 erstellte Bericht wird über ein weiteres Computernetzwerk 64 auch an die übergeordnete Koordinierungsstelle 60 weitergeleitet.

## Patentansprüche

1. Verfahren zur Nutzung erneuerbarer Energiequellenen unter Verwendung von
• einer dezentralen Energieerzeugungsanlage (10), die mit einer erneuerbaren Energiequelle betrieben wird,
• einer dezentralen Steuereinheit (36) am Ort der dezentralen Energieerzeugungsanlage (10), die deren Betrieb steuert, und
• einer zentralen Steuereinheit (24), **gekennzeichnet durch** die folgenden Schritte:
a) Erstellen eines Fahrplanvorschlags (20) an einem beliebigen Ort, wobei in dem Fahrplanvorschlag (20) für einen zukünftigen Zeitraum, der in Zeitintervalle unterteilt ist, Vorgaben für den Betrieb der dezentralen Energieerzeugungsanlage (10) in jedem der Zeitintervalle festgelegt sind, und Übermitteln des Fahrplanvorschlags (20) von dem beliebigen Ort an die zentrale Steuereinheit (24) über ein Computernetzwerk (22),
b) Erstellen eines Fahrplans (32) auf Grundlage des Fahrplanvorschlags (20), wobei in der zentralen Steuereinheit ein Vergleich des Fabrplanvorschlags (20) mit einem prognostizierten Bedarf erfolgt und der Fahrplan (32) gegebenenfalls abweichend vom Fahrplanvorschlag (20) an den Bedarf angepasst erstellt wird,
c) Übermitteln des Fahrplans (32) von der zentralen Steuereinheit (24) an die dezentrale Steuereinheit (36) über ein Computernetzwerk (34),
d) automatisches Steuern der dezentralen Energieerzeugungsanlage (10) **durch** die dezentrale Steuereinheit (36) nach Maßgabe des Fahrplans (32).

2. Verfahren nach Anspruch 1, **dadurch gekennzeichnet, dass** bei der Erstellung des Fahrplanvorschlags (20) oder des Fahrplans (32) Prognosen der Betriebsbedingungen der dezentralen Energieerzeugungsanlage (10) berücksichtigt werden.

3. Verfahren nach Anspruch 1 oder 2, **dadurch gekennzeichnet, dass** die Vorgaben des Fahrplanvorschlags (20) und/oder Fahrplans (32) eine zu erzeugende Wirk- und/oder Blindleistung und/oder zu erbringende Netzsystemdienstleistungen umfassen.

4. Verfahren nach einem der Ansprüche 1 bis 3, **dadurch gekennzeichnet, dass** der Fahrplanvorschlag (20) von einer Person erstellt wird, die für den Betrieb der dezentralen Energieerzeugungsanlage (10) vor Ort verantvwortlich ist.

5. Verfahren nach einem der Ansprüche 1 bis 4, **dadurch gekennzeichnet, dass** ein Web-Interface zur Verfügung gestellt und der Fahrplanvorschlag (20) mit einem Internetbrowser erstellt wird, der über ein Computemetzwerk (22) auf das Web-Interface zugreift.

6. Verfahren nach einem der Ansprüche 1 bis 5, **dadurch gekennzeichnet, dass** die dezentrale Steuereinheit (36) eine Überwachungseinrichtung (42) aufweist, die Betriebsdaten und/oder Umgebungsbedingungen der dezentralen Energieerzeugungsanlage (10) überwacht.

7. Verfahren nach Anspruch 6, **dadurch gekennzeichnet, dass** die von der Überwachungseinrichtung (42) überwachten Betriebsdaten und/oder Umgebungsbedingungen über ein Computemetzwerk (48, 50) an die zentrale Steuereinheit (24) übermittelt und mit dem Fahrplan (22) verglichen werden.

8. Verfahren nach einem der Ansprüche 1 bis 7, **dadurch gekennzeichnet, dass** eine Vielzahl von dezentralen Energieerzeugungsanlagen (10) vorhanden ist, die mit erneuerbaren Energiequellen betrieben werden, wobei eine der Anzahl der dezentralen Energieerzeugungsanlagen (10) entsprechende Anzahl von Fahrplanvorschlägen (20) und Fahrplänen (32) erstellt wird.

9. Verfahren nach Anspruch 8, **dadurch gekennzeichnet, dass** ein Fahrplan (32) angepasst wird, wenn der Vergleich der von der Überwachungseinrichtung überwachten Betriebsdaten und/oder Umgebungsbedingungen mit einem Fahrplan (32) Abweichungen aufzeigt.

10. Verfahren nach einem der Ansprüche 7 bis 9, **dadurch gekennzeichnet, dass** in der zentralen Steuereinheit (24) ein Bericht erstellt wird, der Abweichungen von dem Fahrplan (32) bzw. den Fahrplänen ausweist.

11. Verfahren nach Anspruch 10, **dadurch gekennzeichnet, dass** der Bericht über ein Computemetzwerk (52) an die für den Betrieb der jeweiligen dezentralen Energieerzeugungsanlage (10) vor Ort verantwortliche Person übermittelt wird.

12. Verfahren nach einem der Ansprüche 9 bis 11, **dadurch gekennzeichnet, dass** es eine übergeordnete Koordinierungsstelle (60) gibt, die einen Gruppenfahrplanvorschlag (58) für mehrere an die zentrale Steuereinheit (24) angeschlossene dezentrale Energieerzeugungsanlagen (10) erstellt und/oder ändert und diesen Gruppenfahrplanvorschlag (58) über ein Computernetzwerk (62) an die zentrale Steuereinheit (24) übermittelt.

13. System zur Nutzung erneuerbarer Energiequellen mit
• einer dezentralen Energieerzeugungsanlage (10), die mit einer erneuerbarer Energiequelle betrieben wird,
• einer dezentralen Steuereinheit (36) am Ort der mindestens einen dezentralen Energieerzeugungsanlage (10), die deren Betrieb steuern kann, und
• einer zentralen Steuereinheit (24), **dadurch gekennzeichnet, dass**
• die zentrale Steuereinheit (24) eine Einrichtung zum Empfang eines Fahrplanvorschlags (20) über ein Computernetzwerk (22) aufweist, wobei in dem Fahrplanvorschlag (20) für einen zukünftigen Zeitraum, der in Zeitintervalle unterteilt ist, Vorgaben für den Betrieb der dezentralen Energieerzeugungsanlage (10) in jedem der Zeitintervalle festgelegt sind,
• die zentrale Steuereinheit (24) eine Einrichtung zur Erstellung eines Fahrplans (32) auf Grundlage des Fahrplanvorschlags (20) und eine Einrichtung zur Übermittlung des Fahrplans an die dezentrale Steuereinheit (36) über ein Computemetzwerk (34) aufweist, wobei die zentrale Steuereinheit (24) dazu ausgebildet ist, den Fahrplanvorschlag (20) mit einem prognostizierten Bedarf zu vergleichen und den Fahrplan (32) gegebenenfalls abweichend vom Fahrplanvorschlag (20) an den Bedarf angepasst zu erstellen, und
• die dezentrale Steuereinheit (36) den Betrieb der dezentralen Energieerzeugungsanlage (10) automatisch nach Maßgabe des Fahrplans (32) steuern kann.

14. System nach Anspruch 13, **dadurch gekennzeichnet, dass** die dezentrale Energieerzeugungsanlage (10) eine Biogasanlage ist.

## Claims

1. Method for using renewable energy sources, using
• a remote energy generation plant (10), which is operated by a renewable energy source,
• a remote control unit (36) at the location of the remote energy generation plant (10), which controls the operation thereof, and
• a central control unit (24), **characterized by** the following steps:
a) Producing a proposed schedule (20), at any location, wherein in the proposed schedule (20) for a future time period being divided into time intervals presettings are determined for the operation of the remote energy generation plant (10) in each of the time intervals, and transmitting the proposed schedule (20) to the central control unit (24) via a computer network (22),
b) Producing a schedule (32) based on the proposed schedule (20), wherein in the central control unit, wherein a comparison of the proposed schedule (20) takes place with a forecast demand and the schedule (32) is produced, adapted to the demand, optionally deviating from the proposed schedule (20),
c) Transmitting the schedule (32) from the central control unit (24) to the remote control unit (36) via a computer network (34),
d) Automatic control of the at least one remote energy generation plant (10) by the remote control unit (36) according to the schedule (32).

2. Method according to Claim 1, **characterised in that** when producing the proposed schedule (20) or the schedule (32), forecasts of the operating conditions of the at least one remote energy generation plant (10) are taken into account.

3. Method according to Claim 1 or 2, **characterised in that** the presettings of the proposed schedule (20) and/or the schedule (32) comprise an active power and/or reactive power to be generated and/or network system services to be obtained.

4. Method according to one of Claims 1 to 3, **characterised in that** the proposed schedule (20) is produced by a person who is locally responsible for the operation of the remote energy generation plant (10).

5. Method according to one of Claims 1 to 4, **characterised in that** a web interface is provided and the proposed schedule (20) is produced by means of an internet browser which accesses t the web interface via a computer network (22).

6. Method according to one of Claims 1 to 5, **characterised in that** the remote control unit (36) comprises a monitoring device (42) which monitors operating data and/or environmental conditions of the remote energy generation plant (10).

7. Method according to Claim 6, **characterised in that** the operating data and/or environmental conditions monitored by the monitoring device (42) are transmitted via a computer network (48, 50) to the central control unit (24) and compared with the schedule (22).

8. Method according to one of Claims 1 to 7, **characterised in that** a plurality of remote energy generation plants (10) are present which are operated by renewable energy sources, a corresponding number of proposed schedules (20) and schedules (32) being produced.

9. Method according to Claim 8, **characterised in that** a schedule (32) is adapted when the comparison of the operating data and/or environmental conditions monitored by the monitoring device exhibits deviations from a schedule (32).

10. Method according to one of Claims 7 to 9, **characterised in that** in the central control unit (24) a report is produced which comprises deviations from the schedule (32) or the schedules respectively.

11. Method according to Claim 10, **characterised in that** the report is transmitted via a computer network (52) to the person locally responsible for the operation of the at least one respective remote energy generation plant (10).

12. Method according to one of Claims 9 to 11, **characterised in that** there is a primary coordination point (60) which produces and/or alters a proposed pool schedule (58) for a plurality of remote energy generation plants (10) connected to the central control unit (24), and transmits said proposed pool schedule (58) via a computer network (62) to the central control unit (24).

13. System for using renewable energy sources comprising
• a remote energy generation plant (10) which is operated by a renewable energy source,
• a remote control unit (36) at the location of the at least one remote energy generation plant (10), which may control the operation thereof, and
• a central control unit (24) **characterized in that**
• the central control unit (24) comprises a device for receiving a proposed schedule (20) via a computer network (22), wherein in the proposed schedule (20) for a future time period being divided into time intervals, presettings for the operation of the remote energy generation plant (10) are determined in each of the time intervals,
• the central control unit (24) comprises a device for producing a schedule (32) based on the proposed schedule (20) and a device for transmitting the schedule to the remote control unit (36) via a computer network (34), wherein the central control unit (24) is designed to compare the proposed schedule (20) with a forecast demand and to produce the schedule (32) adapted to the demand, optionally deviating from the proposed schedule (20), and
• the remote control unit (36) can control the operation of the remote energy generation plant (10) automatically according to the schedule (32).

14. System according to Claim 14 or 15, **characterised in that** the at least one remote energy generation plant (10) is a biogas plant.

## Revendications

1. Procédé et système destiné à l'utilisation de sources d'énergie renouvelable en utilisant
• une unité de production énergétique décentralisée (10) qui est actionnée par une source d'énergie renouvelable,
• une unité de commande décentralisée (36) sur l'endroit de l'unité de production énergétique décentralisée (10) qui en commande le fonctionnement, et
• une unité de commande centrale (24), le procédé étant **caractérise par** les étapes suivantes:
a) établir une suggestion d'horaire (20) dans un endroit arbitraire, des objectifs pour le fonctionnement de l'unité de production énergétique décentralisée (10) étant fixés pour chaque intervalle de temps dans la suggestion d'horaire (20) pour un espace de temps futur qui est subdivisé en des intervalles de temps, et transmettre la suggestion d'horaire (20) à l'unité de commande centrale (24) à partir de l'endroit arbitraire via un réseau d'ordinateurs (22),
b) établir un horaire (32) basé sur la suggestion d'horaire (20), une comparaison de la suggestion d'horaire (20) avec un besoin pronostiqué étant faite dans l'unité de commande centrale et l'horaire (32) étant établi de façon adaptée au besoin, le cas échéant par dérogation de la suggestion d'horaire (20),
c) transmettre l'horaire (32) à l'unité de commande décentralisée (36) à partir de l'unité de commande centrale (24) via un réseau d'ordinateurs (34),
d) commande automatique de l'unité de production énergétique décentralisée (10) par l'unité de commande décentralisée (36) conformément à l'horaire (32).

2. Procédé selon la revendication 1, **caractérisé en ce que** des prévisions des conditions de fonctionnement de l'unité de production énergétique décentralisée (10) sont considérées dans l'établissement de la suggestion d'horaire (20) ou de l'horaire (32).

3. Procédé selon la revendication 1 ou 2, **caractérisé en ce que** les objectifs de la suggestion d'horaire (20) et/ou de l'horaire (32) comprennent une puissance réelle et/ou réactive à générer et/ou des services à fournir pour le système de réseau.

4. Procédé selon l'une quelconque des revendications 1 à 3, **caractérisé en ce que** la suggestion d'horaire (20) est faite d'une personne qui est responsable pour le fonctionnement de l'unité de production énergétique décentralisée (10) dans son site.

5. Procédé selon l'une quelconque des revendications 1 à 4, **caractérisé en ce qu'**une interface web est fournie et la suggestion d'horaire (20) est établie à l'aide d'un navigateur web qui a accès à l'interface web via le réseau d'ordinateurs (22).

6. Procédé selon l'une quelconque des revendications 1 à 5, **caractérisé en ce que** l'unité de commande décentralisée (36) a un équipement de surveillance (42) qui surveille des données de fonctionnement et/ou conditions d'environnement de l'unité de production énergétique décentralisée (10).

7. Procédé selon la revendication 6, **caractérisé en ce que** les données de fonctionnement et/ou conditions d'environnement surveillées par l'équipement de surveillance (42) sont transmises à l'unité de commande centrale (24) via un réseau d'ordinateurs (48, 50) et sont comparées avec l'horaire (22).

8. Procédé selon l'une quelconque des revendications 1 à 7, **caractérisé en ce qu'**il y a une pluralité d'unités de production énergétique décentralisées (10) qui sont actionnées par des sources d'énergie renouvelable, un nombre de suggestions d'horaire (20) et d'horaires (32) correspondant au nombre des unités de production énergétique décentralisées (10) étant établis.

9. Procédé selon la revendication 8, **caractérisé en ce que** un horaire (32) est ajusté quand la comparaison des données de fonctionnement et/ou conditions d'environnement surveillées par l'équipement de surveillance présente des déviations par rapport à un horaire (32).

10. Procédé selon l'une quelconque des revendications 7 à 9, **caractérisé en ce que** un récit est produit dans l'unité de commande centrale (24) qui révèle des déviations par rapport à l'horaire (32) ou respectivement aux horaires.

11. Procédé selon la revendication 10, **caractérisé en ce que** le récit est transmis à la personne qui est responsable pour le fonctionnement de l'unité de production énergétique décentralisée (10) dans son site via un réseau d'ordinateurs (52).

12. Procédé selon l'une quelconque des revendications 9 à 11, **caractérisé en ce qu'**il y a une instance maître de coordination (60), qui établit et/ou change une suggestion d'horaire de groupe (58) pour plusieurs unités de production énergétique décentralisées (10) raccordées à l'unité de commande centrale (24), et transmet cette suggestion d'horaire de groupe (58) à l'unité de commande centrale (24) via un réseau d'ordinateurs (62).

13. Système destiné à l'utilisation de sources d'énergie renouvelable, avec
• une unité de production énergétique décentralisée (10) qui est actionnée par une source d'énergie renouvelable,
• une unité de commande décentralisée (36) sur l'endroit de l'au moins une unité de production énergétique décentralisée (10) qui en peut commander le fonctionnement, et
• une unité de commande centrale (24), **caractérise en ce que**
• l'unité de commande centrale (24) présente un équipement pour recevoir une suggestion d'horaire (20) via un réseau d'ordinateurs (22), des objectifs pour le fonctionnement de l'unité de production énergétique décentralisée (10) étant fixés pour chaque intervalle de temps dans la suggestion d'horaire (20) pour un espace de temps futur qui est subdivisé en des intervalles de temps,
• l'unité de commande centrale (24) présente un équipement pour établir un horaire (32) basé sur la suggestion d'horaire (20) et un équipement pour transmettre l'horaire à l'unité de commande décentralisée (36) via un réseau d'ordinateurs (34), l'unité de commande centrale (24) étant configurée à comparer la suggestion d'horaire (20) avec un besoin pronostiqué et à établir l'horaire (32) de façon adaptée au besoin, le cas échéant par dérogation de la suggestion d'horaire (20).
• l'unité de commande décentralisée (36) peut commander le fonctionnement de l'unité de production énergétique décentralisée (10) de façon automatique et conformément à l'horaire (32).

14. Système selon la revendication 13, **caractérisé en ce que** l'unité de production énergétique décentralisée (10) est une installation de biogaz.
